(19) **Europäisches Patentamt**
**European Patent Office**
**Office européen des brevets**

(11) **EP 1 643 858 B1**

(12) **EUROPEAN PATENT SPECIFICATION**

(45) Date of publication and mention
of the grant of the patent:
**04.01.2012 Bulletin 2012/01**

(51) Int Cl.:
***A23L 1/19*** (2006.01)

(21) Application number: **04749176.6**

(86) International application number:
**PCT/SE2004/001140**

(22) Date of filing: **15.07.2004**

(87) International publication number:
**WO 2005/006887 (27.01.2005 Gazette 2005/04)**

(54) **LOW FAT WHIPPABLE NON-DAIRY CREAM**

FETTARME AUFSCHLAGBARE MILCHFREIE SAHNE

SUCCEDANE DE CREME FOUETTEE A FAIBLE TENEUR EN MATIERES GRASSES

(84) Designated Contracting States:
**AT BE BG CH CY CZ DE DK EE ES FI FR GB GR
HU IE IT LI LU MC NL PL PT RO SE SI SK TR**
Designated Extension States:
**LT LV**

(30) Priority: **15.07.2003 SE 0302075**

(43) Date of publication of application:
**12.04.2006 Bulletin 2006/15**

(73) Proprietor: **Raisio plc
21201 Raisio (FI)**

(72) Inventors:
• **LINGERUD, Cecilia
S-374 30 Karlshamn (SE)**

• **JOHANSSON, Carola
S-371 40 Karlskrona (SE)**

(74) Representative: **Svensson, Johan Henrik
Berggren Oy Ab
P.O. Box 16
00101 Helsinki (FI)**

(56) References cited:
**EP-A1- 0 509 579      EP-A1- 0 540 086
GB-A- 561 532      GB-A- 2 162 039**

• **DATABASE WPI Week198335, Derwent
Publications Ltd., London, GB; Class D13, AN
1983-749328, XP002982202 & JP 58 121 766 A
(AJINOMOTO KK) 20 July 1983**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION

The invention relates to a low fat whippable non-dairy cream (NDC) with a fat content from 10 to 25 % (w/w), based on the NDC product, comprising an aqueous phase comprising at least an oat base in an amount from 50 to 90 % (w/w) based on the NDC product, a fat phase comprising at least fat and an emulsifier, the emulsifier being in an amount below 1.2 % (w/w), based on the NDC product. The invention also relates to a process for the production of the whippable non-dairy cream.

BACKGROUND OF INVENTION

The beneficial health effects of dietary fibres are well known and there has therefore been a growing interest in food products made from cereals, such as oats. Oats offers more health benefits than other cereals; as such there has been a focus on different oat products, such as oat-based milk and oat based ice creams, etc. However, even though different kinds of oat products now exist, there is still no low fat whippable oat product available on the market.
EP 0 540 086 discloses a whippable non-dairy cream (NDC) comprising a water continuous emulsion of an aqueous phase, containing thickeners, optionally buttermilk component, fat component and emulsifier. The thickener may be locust bean gum, xanthan gum, guar gum, carrageenan or mixtures thereof and the buttermilk is preferably buttermilk powder. The NDC contains 10-20 % (w/w) of fat and is whippable within 4 minutes.
JP 58116647 discloses a whippable cream consisting of a sugar fatty acid, triglycerides and pyrophosphoric acid or its salt. To enable this cream to be whippable it is necessary to include sugar fatty compounds and pyrophosphoric acid.
GB 2 162 039 discloses non-dairy creams based on vegetable fats containing soybean aqueous infusion, a soy cellulose admixed with vegetable oil and/or hardened vegetable oil and alginic acid derivatives or gelatine, a sugar ester and a polyphosphate salt.
EP 0 509 579 discloses a whippable non-dairy cream based on liquid oil. The whippable NDC comprises an emulsion of a water-continuous phase, optionally containing one or more protein components and optionally thickeners and a fat phase comprising optionally an emulsifier system, wherein the NDC contains 15-60 % (w/w) of a substantially globular vegetable fat of which at least 85 wt% (w/w) consists of a liquid oil and the rest of hard fat.
The abstract published by Thornberg et al., 2002, Functional Food Science, "Forskning for folkhälsa och prevention", at a conference in Lund 22-23 October 2002, discloses a whippable cream based on oat milk. The oat milk was from CEBA AB and the whippable cream consisted of 29 %(w/w) fat. The fat phase consisted of palm kernel fat and between 0 - 1 % (w/w) monoglyceride.
Due to the healthy effects of oats and the increasing need of non-milky low fat products, i.e., a fat content below 25 % (w/w), there is a need for new and better products which fulfil these requirements.

SUMMARY OF THE INVENTION

This application discloses a new non-dairy cream, which has the improved properties of being low fat, whippable and at the same time comprising healthy oats. Even though the fat content is as low as below 25 % (w/w), the NDC is still whippable within a few minutes. Additionally, the NDC can be piped through a frosting tube. The new product is an excellent replacement cream for people either allergic to, or not desiring, milky products and who at the same time prefer low fat products.
Accordingly, in a first aspect, the invention relates to a low fat whippable non-dairy cream having a fat content from 10 to 25 % (w/w) based on the NDC, comprising an aqueous phase comprising at least an oat base in an amount from 50 to 90 % (w/w) based on the NDC, a fat phase comprising at least fat and an emulsifier, the emulsifier being in an amount 1.2 or less %(w/w) based on the NDC, said oat base being obtainable by subjecting oat suspension to treatment with enzymes, wherein the enzymes comprise one or more α-amylases, and wherein the enzymes comprise no β-amylases.
In another aspect, the invention relates to a process for the preparation of a whippable non-dairy cream, comprising the steps of;

a) providing an aqueous phase comprising at least an oat base in an amount from 50 to 90 % (w/w) based on the NDC, said oat base being obtainable by subjecting oat suspension to treatment with enzymes.

b) providing a fat phase comprising at least fat and an emulsifier, the emulsifier being present in an amount 1.2 or less % (w/w) based on the NDC,

c) providing an emulsion by mixing the aqueous phase and the fat phases,

d) processing the emulsion by using one or more of the steps selected from the group consisting of sterilisation, pasteurisation, decantation, heating, homogenisation, flashing and cooling,

e) obtaining the whippable non-dairy cream having a fat content from 10 to 25 % (w/w) based on the NDC,

wherein at least one α-amylase is used in the production of the oat base comprised in the aqueous phase in step (a), and wherein no β-amylase is used in the production of the oat base comprised in the aqueous phase in step (a).

The non-dairy cream allows consumers to have an alternative to the commonly used animal creams. Additionally the NDC is whippable within a short period of time, and can be piped through a frosting tube.

DETAILED DESCRIPTION OF THE INVENTION

The invention relates to a whippable non-dairy cream (NDC) with a fat content from 10 to 25 % (w/w) fat based on the NDC product, such as from about 15 to about 20% (w/w), which is also possible to pipe through a frosting tube. The NDC comprises an emulsion comprising an aqueous phase comprising at least from 50 to 90 % (w/w) oat base, such as from about 80 to about 85% (w/w) oat base, based on the NDC product, and a fat phase comprising at least fat and an emulsifier, the emulsifier being present in an amount of 1.2 or less %(w/w), such as not more than 1.0 % (w/w), based on the NDC product. The fat (i.e., total fat) includes any possible fat from the oat base as well as other added fats from the fat phase as defined below.

The fat in the fat phase may be selected from the group consisting of palm kernel, palm kernel stearin, palm oil, palm stearin, palm mid fraction, coconut fat, soybean oil, rapeseed oil and sunflower oil or mixtures thereof. The fats and oils may be hardened and/or interesterified. One suitable example is Akomic 2000 produced by Karlshamns AB, Sweden.

The oat base used for the production of the NDC has a dry solids or dry substance (DS) content from about 5 to about 30 weight-%, preferably from about 7 to about 15 weight-%, more preferably from about 8 to about 11 weight-%, such as about 9 weight-%.

The oat base comprises approximately 5-15 weight-% fat, such as 10 weight-% fat, by dry solids weight, and approximately 6-10 weight-% protein, by dry solids weight. The oat base has a sweet taste and comprises about 3-6 weight-% glucose, such as 4 weight-% glucose, by dry solids weight and about 3-6 weight-%, such as 5 weight-% β-glucans by dry solids weight. The oat base is obtainable by subjecting oat suspension to treatment with enzymes, wherein the enzymes comprise one or more α-amylases, and wherein the enzymes comprise no β-amylases.

α-amylases are used in the production of the oat base, which is used in the production of the NDC. Some typical examples of α-amylases are Fungamyl® 800 L and Maltogenase™ 400 L, both available from Novonordisk A/S, Denmark.

The emulsifier(s) of the NDC may be selected from the group consisting of polyglycerol esters, mono and/or diglycerides, lactic acid esters of mono and/or diglycerides, citric acid esters of mono and/or diglycerides, lecithin or mixtures thereof, such as monoglycerides. One suitable example of an emulsifier is Palsgaard 0093 from Palsgaard A/S, Denmark.

The non-dairy cream is whippable within 5 minutes, such as from 1 to 3 minutes, using a conventional domestic, electrical mixer (e.g. a Kenwood-Chef). The NDC is whippable at room temperature, for example, about 25°C, or at lower temperatures, for ex., 5°C. The whipped cream shows excellent properties, such as overrun, firmness and mouthfeel.

The NDC shows an overrun value from about 50 %, such as about 60 %. The term "overrun" is intended to mean a value of the increase of volume obtained by the whipping (more specifically the decrease of weight of a certain volume when whipping), and is defined in Example 3.

The NDC shows a firmness value from about 0.25, such as about 0.4. The term "firmness" is intended to mean a value of the structure of the whipped cream, and is defined in Example 3. A whipped cream with an unsatisfactorily low firmness value has a structure of soft foam and is not possible to pipe.

Another important characteristic of the whipped cream is the mouthfeel. The whipped cream should show a "melt-off" behaviour in the mouth that is fast and that does not leave a fat layer in the mouth. However it should not be too fast; otherwise an airy/foamy sensation is obtained, such as that belonging to shaving foam or hair mousse.

The whippable non-dairy cream according to the invention has an acceptable stability with only a minor amount of thickener present or even without any thickener.

The whippable non-dairy cream may comprise one or more components selected from the group consisting of colouring and taste components, such as fruit juice, sugar, other sweetening agents, spices, colourants, preservatives, antioxidants, and flavours for example, vanilla and cocoa.

The invention also relates to a process for the preparation of the whippable NDC according to the invention. The process comprises the steps of making or providing an aqueous phase comprising at least an oat base, making or providing a fat phase comprising at least a fat and an emulsifier, mixing the two phases to form an emulsion and processing the emulsion, to obtain the whippable NDC according to the invention.

More specifically, the process relates to the preparation of a low fat whippable non-dairy cream (NDC) with a fat content from 10 to 25 % (w/w) based on the NDC product, comprising the steps of

a) providing an aqueous phase comprising at least an oat base in an amount from 50 to 90 % (w/w) based on the NDC, said oat base being obtainable by subjecting oat suspension to treatment with enzymes.

b) providing a fat phase comprising at least fat and an emulsifier, the emulsifier being present in an amount 1.2 or less % (w/w) based on the NDC,

c) providing an emulsion by mixing the aqueous phase and the fat phases,

d) processing the emulsion by using one or more of the steps selected from the group consisting of sterilisation, pasteurisation, decantation, heating, homogenisation, flashing and cooling,

e) obtaining the whippable non-dairy cream having a fat content from 10 to 25 % (w/w) based on the NDC,

wherein at least one $\alpha$-amylase is used in the production of the oat base comprised in the aqueous phase in step (a), and wherein no $\beta$-amylase is used in the production of the oat base comprised in the aqueous phase in step (a).

The process of making the aqueous phase comprises the steps of providing an oat base and optionally mixing the water-soluble components, such as sugar and flavours, with the provided oat base. The oat base may be prepared by wet or dry milling the oats which are then suspended in a liquid to provide a suspension. Additionally, the oats are subjected to treatment with enzymes comprising one or more $\alpha$-amylases, which are added to the suspension, after which the suspension is incubated at 55-70 °C. $\alpha$-amylase(s) and no $\beta$-amylases are used in the process. Typically, the incubation is performed for a period from about 45 minutes to about 90 minutes under constant stirring. The temperature and time of the incubation are chosen with reference to the enzymatic activity for the enzymes used. Examples of $\alpha$-amylases are Fungamyl® 800 L and Maltogenase™ 400 L, both available from Novonordisk A/S, Denmark. The suspension containing the $\alpha$-amylases is then exposed to an inactivation step by increasing the temperature to at least 80 °C, such as between 80 and 90 °C, such as 85 °C. The $\alpha$-amylases may be added in two or more steps in the ratios of 50/50% (w/w) (step I/step II), 40/60 % (w/w) or 70/30% (w/w). By such an approach the viscosity is kept low during incubation and the incubation time is minimized.

The above described embodiments for producing an oat base may comprise one or more additional steps selected from the group consisting of decantation, flashing, homogenisation, sterilisation and pasteurisation.

According to one embodiment, rolled oats are fed into a dosing screw and subsequently into two milling apparatus. The means for dosing and milling may be any such commercially available means known for a person skilled in the art. Thus, the milling can be performed by any type of fractionating process, such as by dry or wet grinding. Examples of milling apparatuses are pin mill, hammer mill and roller mill. Another suitable milling apparatus is, for example, a perforated disk mill and a colloidal mill, and the milling may be performed in one or more stages in order to have the desired milling ratio of the rolled oats. In dry grinding, the oat flour is suspended in water with a preferred temperature of 50- 60°C. In wet grinding, the water used has also a preferred temperature of 50- 60°C. In a special embodiment the water used is deionised water.

Process water may be added from a balance tank through a heat exchanger, to give the water a temperature of 50- 60°C during one of the milling stages, and the process water and the oat flour are mixed to form an oat suspension.

The oat suspension may have a weight ratio of flour to water within the range corresponding to a dry solids (DS) content of about 5-30 weight-%, specifically 10-25 weight-%, preferably 10-20 weight-%, and more preferably 10-15 weight-%. The suspension may have a close to neutral pH, such as from 5 to 8, preferably about 6-6.5. After the milling the suspension is deaerated. Then $\alpha$-amylase(s) is/are added. The amount of enzyme added is typically 0.004 % (v/w) Fungamyl® 800 L and 0.005 % (v/w) Maltogenase™ 400 L. Typically the reaction time for treatment with an $\alpha$-amylase is 45 min-1.5 hr and the typical reaction temperature is between 55 and 70°C.

The $\alpha$-amylase(s) may be added in two or more steps to keep the viscosity low during incubation, thereby minimizing incubation time. After the enzymatic reaction the enzyme treated cereal suspension is subjected to an inactivation step, the step comprising a heat treatment, such as steam injection, to inactivate the $\alpha$-amylase. The inactivation temperature is at least 80°C, such as about 80-90°C, such as 85 °C. Following the $\alpha$-amylase inactivation treatment, the suspension may be subjected to a flashing step and/or a decantation step. In the decantation step, the fibres are separated from the suspension and the oat base is obtained.

The aqueous phase used in the preparation of the NDC is produced from the oat base by adjusting the solids content by adding or removing water if necessary. Other water-soluble components such as sugar and flavours may be included in the aqueous phase.

The aqueous phase comprising the oat base may be produced by the above mentioned method or any similar method which provides an oat base with the same characteristics as defined above. The aqueous phase comprises the oat base which has a sweet taste and which comprises approximately 5-15 weight-% fat, such as 10 weight-% fat, by dry solids weight, and approximately 6-10 weight-% protein, by dry solids weight. The oat base also comprises about 3-6 weight-% glucose, such as 4 weight-% glucose, by dry solids weight and about 3-6 weight-%, such as 5 weight-% β-glucans by dry solids weight.

The fat phase comprising fat and at least an emulsifier is provided. The fat is preheated to a temperature of from about 60°C to about 75°C, depending on the melting point of the fat, and the emulsifier is added to form the fat phase. Optionally other fat-soluble components, such as flavour and colourants, are added at this step.

The aqueous phase comprising at least an oat base in an amount from 50 to 90 % (w/w) of the NDC product, and the fat phase in an amount to give a total fat content from 10 to 25 % (w/w) of the NDC product, comprising at least fat and an emulsifier, the emulsifier being present in an amount of 1.2 or less % (w/w) of the NDC product, are then mixed to form an emulsion. The emulsion is then processed using one or more of the steps selected from the group consisting of sterilisation, pasteurisation, heating, flashing, homogenisation decantation and cooling to obtain the whippable non-dairy cream.

Before sterilisation the emulsion is preferably preheated to a temperature between 80 and 85°C. The NDC emulsion is thereafter sterilised preferably using UHT treatment at a high temperature for a short time, for example, from about 130 to about 150 °C for 2 to 20 seconds, preferably from about 135 to about 145 °C for 3 to 10 seconds, such as at 140°C for 8 seconds.

The NDC may be subjected to flashing, to a temperature of about 80-85°C, whereby water and/or other possible undesired components affecting odour or taste originating from the raw materials, may be removed. Homogenisation, for example, in two steps at a pressure of at least 180 bar in the second or more extreme step, is also preferably included in the preparation of the NDC. The sterilised or pasteurised, homogenised, NDC is then cooled to a temperature of 15 °C or less, and pumped to aseptic storage and/or packed aseptically.

EXAMPLES

The present invention is illustrated below by a number of examples.

EXAMPLE 1

Preparation of an oat base

35 kg of rolled oats, from Frebaco Kvarn AB, Sweden were fed into a dosing screw and milled in two steps by a perforated disk mill (Fryma, Germany) followed by a colloidal mill (Fryma, Germany). During the milling procedure 216 litres of water was added at a temperature of 59°C to provide an oat suspension.

To said oat suspension or slurry, 5 ml of Fungamyl®800L and 6.25 ml of Maltogenase™ 400 L was added immediately while pumping the oat slurry into an incubation tank, and a second addition of 5 ml of Fungamyl®800L and 6.25 ml of Maltogenase™ 400 L was made when the tank contained 125 kg of the slurry. The total addition of Fungamyl®800L in this example was 0.004 % (w/w) by weight of the batch weight and the total amount of Maltogenase™ 400 L was 0.005 % (w/w) by weight of the batch weight.

Samples of 50 ml volume were taken from the oat slurry, boiled and cooled to room temperature. The viscosity of the sample was evaluated using a Bostwick equipment. After 15 seconds, a value of 18 cm is anticipated as the required value in this step of the process. The enzymatic treatment of the slurry was allowed to proceed for 50 minutes and a value of 18.5 cm was given in the Bostwick test.

The enzymatic treatment of the slurry was then stopped by heat inactivation of the enzyme at a temperature of 85 °C by steam injection. In the following flashing step, the temperature was decreased to 65 °C and thereafter a separation of the insoluble fibre content took place by decantation. The obtained oat base was then pumped to a mixing tank.

The obtained oat base had a DS content of 10.6 weight-% and contained 5.3 weight-% protein, 9.3 weight-% fat, 4.2 weight-% glucose and 4.7 weight-% β-glucans, by dry solids weight. The rest of the dry solids content comprise mainly other carbohydrates and ashes.

EXAMPLE 2

Preparation of a whippable non-dairy cream

Different combinations of oat base and fat phases were prepared as shown in Table 1 below. Sample 1-3 are products according to the invention, while sample 4 is a comparative example. Samples 1 to 3 were prepared to give a fat content of about 15 % (w/w), based on the NDC. Sample 4 was made according to the abstract published by Thornberg et.al., in Functional Food Science, "Forskning för folkhälsa och prevention", conference proceedings, Lund 22-23 October 2002.

The oat base used in the NDCs according to the invention was the oat base obtained in Example 1, optionally diluted with water to give the DS values shown in Table 1.

The Oatly oat drink used in sample 4 was produced by CEBA AB, Sweden. The Oatly oat drink comprised 9.8 weight-% protein, 14.7 weight-% fat, 0 weight-% glucose and 3.5 weight-% β-glucans, by dry solids weight.

The fats used were Akomic 2000, a palm kernel and palm oil with a melting point of 33.5°C, and Akotop H, a hydrogenated palm kernel fat with a melting point of 34°C. Both fats were produced by Karlshamns AB, Sweden.

The emulsifiers used were Palsgaard 0093, a monoglyceride produced by Palsgaard A/S, Denmark, and Citrem LR 10/J, a citric acid ester of monoglycerides, produced by Danisco Cultor Denmark, Denmark.

The oat bases were heated to a temperature of 60°C. The fats were melted by preheating to a temperature of 70°C, prior to the addition of the emulsifier(s). The fat phase and the oat base were mixed under high shear conditions with an Ystral-mixer, after which an oil/water emulsion was obtained. The emulsion was then sterilised using UHT-treatment at 140°C for 8 seconds. The emulsion was cooled to 85°C and homogenised using pressures of 50 and 300 bar in 2 stages. The sterilised, homogenised non-dairy creams obtained were cooled to a temperature of 8°C.

Table 1. Composition of whippable NDCs. Amounts are given as % (w/w).

| Sample no | 1 | 2 | 3 | 4 |
|---|---|---|---|---|
| Oat base DS 10.6 % | 85.2% | - | - | - |
| Oat base DS 7,7 % | - | 85.2% | - | - |
| Oat base DS 5.0 % | - | - | 85.2% | - |
| Oatly oat drink | - | - | - | 71.85% |
| Water | - | - | - | - |
| Fat free DS (%) | 9.6 | 7.0 | 4.5 | 8.7 |
| Akomic 2000 | 14.0% | 14.0% | 14.0% | - |
| Akotop H | - | - | - | 28.0% |
| Palsgaard 0093 | 0.8% | 0.8% | 0.8% | - |
| Citrem LR 10 | - | - | - | 0.15% |
| Total fat (%) | 15 | 15 | 15 | 29 |

EXAMPLE 3

The non-dairy creams obtained in example 2 were whipped using a conventional domestic electrical mixer; the overrun and firmness were analysed, while the tops/contours of the whipped non-dairy creams were judged. The possibility to pipe the whipped NDCs through a frosting tube was also investigated.

The overrun was calculated as:

$$[(A-B)/A] \times 100,$$

where:

A is the weight of a unit volume of cream, and B is the weight of a unit volume of whipped cream.

The firmness is defined as the force required to compress the whipped cream 15 mm using a 20 mm cylindrical probe (P/20) at a speed of 2 mm/s. The analyses were made with a TA-XT2, texture analyser, Stable Micro Systems Ltd, United Kingdom. Results are shown in Table 2 below.

Table 2. Measurements of the whipped non-dairy creams

| Sample no | 1 | 2 | 3 | **4** |
|---|---|---|---|---|
| Overrun (%) | 65.7 | 66.9 | 71.3 | 28.5 |
| Firmness (N) | | 0.351 | 0.250 | - |

The mouthfeel of sample 1, 2 and 3 were good; the samples showed a melt-off behaviour comparable to a traditional low fat cream based on dairy protein. Sample **4** showed an unsatisfactory melt-off behaviour, it did not melt and left a fat layer in the mouth.
The tops of the whipped creams were compared and evaluated.
Sample 1, 2 and 3 showed tops with sharp contours, while sample **4** was too soft The possibility to pipe the whipped NDCs through a frosting tube was also investigated. Samples 1, 2 and 3 could be piped but not sample **4,** which was too soft.
It was surmised that the differences in the characteristics/behaviour observed was related to the different application of enzymes during the production of the oat base. Only α-amylase(s) were used in the production of the oat base comprised in NDC samples 1-3, while both α-amylase(s) and β-amylase(s) were used for the production of the oat base comprised in NDC sample **4**. The composition of the sugars and especially the higher molecular weight carbohydrates thought to result after the enzymatic treatment therefore differ significantly, presumably leading to different characteristics/behaviour of the whippable NDC.

**Claims**

1.   A whippable non-dairy cream (NDC) with a fat content from 10 to 25 % (w/w) based on the NDC, comprising an aqueous phase comprising at least from 50 to 90 % (w/w) oat base, based on the NDC, a fat phase comprising at least fat and an emulsifier, the emulsifier being in an amount 1.2 or less % (w/w) based on the NDC, said oat base being obtainable by subjecting oat suspension to treatment with enzymes, wherein the enzymes comprise one or more α-amylases, and wherein the enzymes comprise no β-amylase.

2.   The whippable non-dairy cream according to claim 1, wherein the fat content is from 15 to 20 % (w/w).

3.   The whippable non-dairy cream according to any of the preceding claims, wherein the fat is selected from the group consisting of palm kernel, palm kernel stearin, palm oil, palm stearin, palm mid fraction, coconut fat, soybean oil, rapeseed oil and sunflower oil or mixtures thereof.

4.   The whippable non-dairy cream according to any of the preceding claims, wherein the oat base has a dry solids content (DS) from 5 to 30 weight-%, preferably from 7 to 15 weight-%, more preferably from 8 to 11 weight-%, such as 9 weight-%.

5.   The whippable non-dairy cream according to any of the preceding claims, wherein the oat base comprises 5-15 weight-% fat, such as 10 weight-% fat, by dry solids weight, and 6-10 weight-% protein, by dry solids weight, 3-6 weight-% glucose, such as 4 weight-% glucose, by dry solids weight and 3-6 weight-% β-glucans, such as 5 weight-% β-glucans by dry solids weight.

6.   The whippable non-dairy cream according to any of the preceding claims, wherein the emulsifier is selected from the group consisting of polyglycerol esters, mono and/or diglycerides, lactic acid esters of mono and/or diglycerides, citric acid esters of mono and/or diglycerides or lecithin or mixtures thereof.

7.   The whippable non-dairy cream according to claim 6, wherein the emulsifier is mono and/or diglyceride.

8.   The whippable non-dairy cream according to any of the preceding claims, wherein the non-dairy cream comprises one or more components selected from the group consisting of colouring and taste components.

9.   The whippable non-dairy cream according to any of the preceding claims, wherein the non-dairy cream does not contain thickeners.

10. The whippable non-dairy cream according to any of the preceding claims, wherein the non-dairy cream is whippable at room temperature or lower temperatures such as 5°C, within 5 minutes, such as 1-3 minutes, using a conventional domestic electrical mixer.

11. The whippable non-dairy cream according to any of the preceding claims, wherein the non-dairy cream shows an overrun value from 50 % (w/w).

12. The whippable non-dairy cream according to any of the preceding claims, wherein the whipped non-dairy cream can be piped through a frosting tube.

13. A process for the preparation of a whippable non-dairy cream, comprising the steps of;

   a) providing an aqueous phase comprising at least an oat base in an amount from 50 to 90 % (w/w) based on the NDC, said oat base being obtainable by subjecting oat suspension to treatment with enzymes.
   b) providing a fat phase comprising at least fat and an emulsifier, the emulsifier being present in an amount 1.2 or less % (w/w) based on the NDC,
   c) providing an emulsion by mixing the aqueous phase and the fat phases,
   d) processing the emulsion by using one or more of the steps selected from the group consisting of sterilisation, pasteurisation, decantation, heating, homogenisation, flashing and cooling,
   e) obtaining the whippable non-dairy cream having a fat content from 10 to 25 % (w/w) based on the NDC,

   wherein at least one $\alpha$-amylase is used in the production of the oat base comprised in the aqueous phase in step (a), and wherein no $\beta$-amylase is used in the production of the oat base comprised in the aqueous phase in step (a).

14. The process according to claim 13, wherein the sterilisation is carried out as a UHT-treatment at a high temperature for a short time, for example, from 130 to 150°C for 2 to 20 seconds, preferably from 135 to 145°C for 3 to 10 seconds, such as at 140°C for 8 seconds.

15. A whippable non-dairy cream obtainable by the process according to claim 13 or 14, wherein the NDC has a fat content from 10 to 25 % (w/w), comprising an aqueous phase comprising at least from 50 to 90 % (w/w) oat base, a fat phase comprising at least fat and an emulsifier, the emulsifier being in an amount 1.2 or less % (w/w) based on the NDC.

16. The whippable non-dairy cream according to claim 15, wherein the oat base has a dry solids content (DS) from 5 to 30 weight-%, preferably from 7 to 15 weight-%, more preferably from 8 to 11 weight-%, such as 9 weight-%.

17. The whippable non-dairy cream according to claim 15 or 16, wherein the oat base comprises 5-15 weight-% fat, such as 10 weight-% fat, by dry solids weight, and 6-10 weight-% protein, by dry solids weight, 3-6 weight-% glucose, such as 4 weight-% glucose, by dry solids weight and 3-6 weight-%, such as 5 weight-% $\beta$-glucans by dry solids weight.

**Patentansprüche**

1. Aufschlagbare milchfreie Sahne (NDC) mit einem Fettgehalt von 10 bis 25 % (w/w) basierend auf der NCD, umfassend eine wässrige Phase, welche mindestens von 50 bis 90% (w/w) einer Haferbasis, basierend auf der NCD, umfasst, eine Fettphase, welche mindestens Fett und einen Emulgator umfasst, wobei der Emulgator in einer Menge von 1,2 % oder weniger (w/w) vorliegt, basierend auf der NCD, wobei die Haferbasis erhältlich ist durch Vornahme einer Behandlung einer Hafersuspension mit Enzymen, wobei die Enzyme eine oder mehr $\alpha$-Amylasen umfassen und wobei die Enzyme keine $\beta$-Amylasen umfassen.

2. Aufschlagbare milchfreie Sahne nach Anspruch 1, worin der Fettgehalt von 15 bis 20 % (w/w) ist.

3. Aufschlagbare milchfreie Sahne nach einem der vorherigen Ansprüche, worin das Fett ausgewählt wird aus der Gruppe, bestehend aus Palmkernöl, Palmkernstearin, Palmstearin, Palmmittelfraktion, Kokosfett, Sojaöl, Rapsöl und Sonnenblumenöl oder Mischungen davon.

4. Aufschlagbare milchfreie Sahne nach einem der vorherigen Ansprüche, worin die Haferbasis einen trockenen Feststoffanteil (DS) von 5 bis 30 Gew.-%, bevorzugt von 7 bis 15 Gew.-%, besonders bevorzugt von 8 bis 1 1 Gew.-%, wie 9 Gew.-% aufweist.

5. Aufschlagbare milchfreie Sahne nach einem der vorherigen Ansprüche, worin die Haferbasis 5-15 Gew-% Fett, wie 10 Gew.-%, Fett, bezogen auf den trockenen Feststoffanteil, und 6-10 Gew.-% Protein bezogen auf den trockenen Feststoffanteil, 3-6 Gew.-% Glucose, wie 4 Gew.-% Glucose bezogen auf den trockenen Feststoffanteil, und 3-6 Gew.-% β-Glucane, wie 5 Gew.-% β-Glucane, bezogen auf den trockenen Feststoffanteil, umfasst.

6. Aufschlagbare milchfreie Sahne nach einem der vorherigen Ansprüche, wobei der Emulgator ausgewählt wird aus der Gruppe, bestehend aus Polyglycerolestern, Mono- und/oder Diglyceriden, Milchsäureester der Mono- und/oder Diglyceriden, Zitronensäureester der Mono- und/oder Diglyceriden oder Lecithine oder Mischungen davon.

7. Aufschlagbare milchfreie Sahne nach Anspruch 6, worin der Emulgator Mono- und/oder Diglycerid ist.

8. Aufschlagbare milchfreie Sahne nach einem der vorherigen Ansprüche, wobei die milchfreie Sahne einen oder mehr Bestandteile, ausgewählt aus der Gruppe, bestehend aus färbenden und Geschmackkomponenten umfasst.

9. Aufschlagbare milchfreie Sahne nach einem der vorherigen Ansprüche, wobei die milchfreie Sahne keine Verdikkungsmittel umfasst.

10. Aufschlagbare milchfreie Sahne nach einem der vorherigen Ansprüche, wobei die milchfreie Sahne bei Raumtemperatur oder niedrigeren Temperaturen wie 5 °C innerhalb von 5 Minuten, wie 1-3 Minuten, unter Verwendung eines konventionellen, elektrischen Haushaltsmixers aufschlagbar ist.

11. Aufschlagbare milchfreie Sahne nach einem der vorherigen Ansprüche, wobei die milchfreie Sahne einen Überlaufwert von 50 % (w/w) aufweist.

12. Aufschlagbare milchfreie Sahne nach einem der vorherigen Ansprüche, wobei die aufgeschlagene milchfreie Sahne durch einen Spritzbeutel geleitet werden kann.

13. Verfahren zur Herstellung einer aufschlagbaren milchfreien Sahne, umfassend die Schritte:

a) Bereitstellen einer wässrigen Phase, welche mindestens eine Haferbasis in einer Menge von 50 bis 90 % (w/w), basierend auf der NDC, umfasst, wobei die Haferbasis erhältlich ist durch Vornahme einer Behandlung einer Hafersuspension mit Enzymen,
b) Bereitstellen einer Fettphase, welche mindestens Fett und Emulgator umfasst, wobei der Emulgator in einer Menge von 1,2 % oder weniger (w/w), basierend auf der NDC, vorliegt,
c) Bereitstellen einer Emulsion durch Mischen der wässrigen Phase und der Fettphase,
d) Verarbeitung der Emulsion durch Verwendung ein oder mehrerer Schritte, welche ausgewählt werden aus der Gruppe, bestehend aus Sterilisation, Pasteurisation, Dekantieren, Erhitzen, Homogenisieren, Schockgefrieren und Kühlen,
e) Erhalten der aufschlagbaren milchfreien Sahne, welche einen Fettgehalt von 10 bis 25 % (w/w), basierend auf der NDC, aufweist,

wobei mindestens eine α-Amylase verwendet wird bei der Herstellung der Haferbasis, welche in der wässrigen Phase in Schritt (a) umfasst ist, und wobei keine β-Amylase verwendet wird bei der Herstellung der Haferbasis, welche in der wässrigen Phase in Schritt (a) umfasst ist.

14. Verfahren nach Anspruch 13, wobei die Sterilisation als eine UHT-Behandlung bei einer hohen Temperatur für kurze Zeit, beispielsweise von 130 bis 150 °C für 2 bis 20 Sekunden, bevorzugt von 135 bis 145 °C für 3 bis 10 Sekunden, wie bei 140 °C für 8 Sekunden durchgeführt wird.

15. Aufschlagbare milchfreie Sahne, erhältlich durch das Verfahren nach Anspruch 13 oder 14, wobei die NDC einen Fettgehalt von 10 bis 25 % (w/w) aufweist, umfassend eine wässrige Phase, welche mindestens von 50 bis 90 % (w/w) einer Haferbasis umfasst, eine Fettphase, welche mindestens Fett und einen Emulgator umfasst, wobei der Emulgator in einer Menge von 1,2 % oder weniger (w/w), basierend auf der NDC, vorliegt.

**16.** Aufschlagbare milchfreie Sahne nach Anspruch 15, worin die Haferbasis einen trockenen Feststoffanteil (DS) von 5 bis 30 Gew.-%, bevorzugt von 7 bis 15 Gew.-%, besonders bevorzugt von 8 bis 1 1 Gew.-%, wie 9 Gew.-% aufweist.

**17.** Aufschlagbare milchfreie Sahne nach einem der Ansprüche 15 oder 16, worin die Haferbasis 5-15 Gew.% Fett, wie 10 Gew.-% Fett, bezogen auf den trockenen Feststoffanteil, und 6-10 Gew.-% Protein, bezogen auf den trockenen Feststoffanteil, 3-6 Gew.-% Glucose, wie 4 Gew.-% Glucose, bezogen auf den trockenen Feststoffanteil, und 3-6 Gew.-%, wie 5 Gew.-% β-Glucane, bezogen auf den trockenen Feststoffanteil, umfasst.

**Revendications**

**1.** Une crème non laitière (CNL) susceptible d'être fouettée présentant une teneur en matières grasses comprise entre 10 et 25% en poids par rapport au poids de crème non laitière (CNL), contenant une phase aqueuse comprenant au moins 50 à 90% en poids d'une base avoine par rapport au poids de crème non laitière (CNL) et contenant une phase grasse comprenant au moins une matière grasse et un émulsifiant, l'émulsifiant formant au plus 1,2% en poids par rapport au poids de crème non laitière (CNL), ladite base avoine étant susceptible d'être obtenue par traitement de la suspension d'avoine par des enzymes, dans lequel les enzymes comprennent une ou plusieurs α-amylases et dans lequel les enzymes ne comprennent pas de β-amylases.

**2.** La crème non laitière susceptible d'être fouettée selon la revendication 1, dans laquelle la teneur en matière grasse est de 15 à 20% en poids.

**3.** La crème non laitière susceptible d'être fouettée selon l'une quelconque des revendications précédentes, dans laquelle la matière grasse est choisie dans le groupe constitué de huile de palmiste, stéarine de palmiste, huile de palme, stéarine de palme, fraction moyenne d'huile de palme, graisse de noix de coco, huile de soja, huile de colza, huile de tournesol ou leurs mélanges.

**4.** La crème non laitière susceptible d'être fouettée selon l'une quelconque des revendications précédentes, dans laquelle la base avoine présente une teneur en solides secs (SS) comprise entre 5 et 30% en poids, de préférence entre 7 et 15% en poids, plus préférablement entre 8 et 11% en poids, notamment 9% en poids.

**5.** La crème non laitière susceptible d'être fouettée selon l'une quelconque des revendications précédentes, dans laquelle la base avoine comprend de 5 à 15% en poids, par exemple 10% en poids, de matière grasse par rapport au poids de solides secs, et de 6 à 10% en poids de protéine par rapport au poids de solides secs, 3 à 6% de glucose, par exemple 4% en poids, de glucose par rapport au poids de solides secs et 3 à 6% en poids de β-glucanes, par exemple 5% en poids de β-glucanes par rapport au poids en solides secs.

**6.** La crème non laitière susceptible d'être fouettée selon l'une quelconque des revendications précédentes, dans laquelle l'émulsifiant est choisi dans le groupe consistant en esters de polyglycérol, mono et/ou diglycérides, esters d'acide lactique de mono et/ou diglycérides, esters d'acide citrique de mono et/ou diglycérides ou de lécithine ou leurs mélanges.

**7.** La crème non laitière susceptible d'être fouettée selon la revendication 6, dans laquelle l'émulsifiant est le mono et/ou le diglycéride.

**8.** La crème non laitière susceptible d'être fouettée selon l'une quelconque des revendications précédentes, dans laquelle la crème non laitière comprend un ou plusieurs composants choisis dans le groupe consistant en des composants générateurs de couleur et des composants générateurs de goût.

**9.** La crème non laitière susceptible d'être fouettée selon l'une quelconque des revendications précédentes, dans laquelle la crème non laitière ne contient pas d'épaississants.

**10.** La crème non laitière susceptible d'être fouettée selon l'une quelconque des revendications précédentes, dans laquelle la crème non laitière est susceptible d'être fouettée à température ambiante ou à des températures inférieures telles que par exemple 5°C, pendant au plus 5 minutes, par exemple 1 à 3 minutes, en utilisant un mixeur électrique de ménage standard.

**11.** La crème non laitière susceptible d'être fouettée selon l'une quelconque des revendications précédentes, dans laquelle la crème non laitière présente un développement d'une valeur de 50% (poids/poids).

12. La crème non laitière susceptible d'être fouettée selon l'une quelconque des revendications précédentes, dans laquelle la crème non laitière fouettée peut être canalisée à travers un tube de glaçage.

13. Un procédé de préparation de crème non laitière susceptible d'être fouettée comprenant les étapes de :

a) fourniture d'une phase aqueuse comprenant au moins une base avoine en une quantité de 50 à 90% en poids/poids de crème non laitière (CNL), ladite base avoine étant susceptible d'être obtenue en soumettant la suspension d'avoine à un traitement par des enzymes,
b) fourniture d'une phase grasse comprenant au moins une matière grasse et un émulsifiant, ledit émulsifiant étant présent en une quantité au plus de 1,2% en poids/poids de crème non laitière (CNL),
c) fourniture d'une émulsion par mélange de la phase aqueuse et des phases de matières grasses,
d) traitement de l'émulsion par une ou plusieurs des étapes de traitement choisies dans le groupe constitué par stérilisation, pasteurisation, décantation, chauffage, homogénéisation, flashing et refroidissement,
e) obtention de la crème non laitière susceptible d'être fouettée contenant une teneur en matières grasses de 10 à 25% en poids par rapport au poids de crème non laitière (CNL)

procédé dans lequel au moins une $\alpha$-amylase est utilisée pour la production de la base avoine comprise dans la phase aqueuse de l'étape (a), et aucune $\beta$-amylase n'est employée lors de la production de la base avoine comprise dans la phase aqueuse de l'étape (a).

14. Le procédé selon la revendication 13, dans laquelle la stérilisation est menée comme un traitement UHT à haute température pendant une courte période, par exemple entre 130 et 150°C pendant 2 à 20 secondes, de préférence entre 135 et 145°C pendant 3 à 10 secondes, par exemple à 140°C pendant 8 secondes.

15. La crème non laitière susceptible d'être fouettée pouvant être obtenue par le procédé de la revendication 13 ou 14, dans laquelle la crème non laitière (CNL) présente une teneur (poids/poids) en matière grasse de 10 à 25%, comprenant une phase aqueuse comprenant au moins 50 à 90% en poids par rapport au poids de base avoine, une phase grasse comprenant au moins une matière grasse et un émulsifiant, l'émulsifiant étant présent en une quantité au plus de 1,2% en poids par rapport au poids de crème non laitière (CNL).

16. La crème non laitière susceptible d'être fouettée selon la revendication 15, dans laquelle la base avoine présente une teneur en solides secs (SS) de 5 à 30% en poids, de préférence de 7 à 15% en poids, plus préférablement de 8 à 12% en poids et notamment 9% en poids.

17. La crème non laitière susceptible d'être fouettée selon la revendication 15 ou 16, dans laquelle la base avoine comprend de 5 à 15% en poids de matière grasse, par exemple 10% en poids de matière grasse par rapport au poids de solides secs, et de 6 à 10% en poids de protéine par rapport au poids de solides secs, de 3 à 6% en poids de glucose, par exemple 4% en poids de glucose par rapport au poids de solides secs et de 3 à 6% en poids de $\beta$-glucanes, par exemple 5% en poids de $\beta$-glucanes par rapport au poids de solides secs.

## REFERENCES CITED IN THE DESCRIPTION

### Patent documents cited in the description

- EP 0540086 A
- JP 58116647 B
- GB 2162039 A
- EP 0509579 A

### Non-patent literature cited in the description

- **THORNBERG et al.** Forskning for folkhälsa och prevention. *Functional Food Science,* 22 October 2002
- **THORNBERG.** Forskning för folkhälsa och prevention. *Functional Food Science,* 22 October 2002